# EUROPEAN PATENT APPLICATION

(11) **EP 3 875 328 A2**
(43) Date of publication of application: **08.09.2021**
(21) Application number: 21164553.6
(22) Date of filing: 24.03.2021
(51) Int. Cl.: B60W 30/14, B60W 40/09, B60W 50/08, B60W 50/10, B60W 50/00

(54) **CRUISE CONTROL METHOD AND APPARATUS, DEVICE, VEHICLE AND MEDIUM**

(30) Priority: 24.09.2020 CN 202011019235
(71) Applicant: BEIJING BAIDU NETCOM SCIENCE AND TECHNOLOGY CO. LTD., 100085 Beijing (CN)
(72) Inventor: WANG, Ruisuo, BEIJING, 100085 (CN)
(74) Representative: Viering, Jentschura & Partner mbB Patent- und Rechtsanwälte

(57) **Abstract**

The present application discloses a cruise control method and apparatus, a device, a vehicle and a medium and relates to the technical field of automatic control. The method includes: acquiring a driving habit weight of at least one candidate driving strategy associated with a target driving environment; wherein the driving habit weight is determined based on historical driving data of a historical driving device of a driving user; selecting a target driving strategy from the at least one candidate driving strategy according to the driving habit weight; and performing a cruise control on a target driving device of the driving user according to the target driving strategy. The embodiments of the present application improve the degree of adaptation between the cruise control process and the driving user.

## Description

### TECHNICAL FIELD

The present application relates to automatic driving technology, in particular to the technical field of automatic control, and specifically to a cruise control method and apparatus, a device, a vehicle and a medium.

### BACKGROUND

With the continuous development of artificial intelligence technology, artificial intelligence has received extensive attention in the technical field of automatic driving, and is gradually changing people's driving habits and travel methods.

In the process of automatic driving, a fixed driving strategy is usually set in advance to realize cruise control of the driving device. However, the above solution is difficult to adapt to different driving users, which reduces the driving experience of the driving users.

### SUMMARY

The present application provides a cruise control method and apparatus, a device, a vehicle and a medium, which are better matched to the driving user.

According to an aspect of the present application, there is provided a cruise control method, and the method includes:

acquiring a driving habit weight of at least one candidate driving strategy associated with a target driving environment; wherein the driving habit weight is determined based on historical driving data of a historical driving device of a driving user;

selecting a target driving strategy from the at least one candidate driving strategy according to the driving habit weight; and

performing a cruise control on a target driving device of the driving user according to the target driving strategy.

According to another aspect of the present application, there is provided a cruise control apparatus, and the apparatus includes:

a driving habit weight acquiring module, configured for acquiring a driving habit weight of at least one candidate driving strategy associated with a target driving environment; wherein the driving habit weight is determined based on historical driving data of a historical driving device of a driving user;

a target driving strategy selecting module, configured for selecting a target driving strategy from the at least one candidate driving strategy according to the driving habit weight; and

a cruise controlling module, configured for performing a cruise control on a target driving device of the driving user according to the target driving strategy.

According to yet another aspect of the present application, there is provided an electronic device, and the electronic device includes:

at least one processor; and

a memory communicatively connected to the at least one processor; wherein,

the memory stores instructions executable by the at least one processor to enable the at least one processor to implement the cruise control method provided by any one of embodiments of the present application.

According to still another aspect of the present application, there is provided a vehicle, wherein the vehicle is provided with the electronic device provided by any one of embodiments of the present application.

According to yet still another aspect of the present application, there is provided a non-transitory computer-readable storage medium storing computer instructions for causing the computer to perform the cruise control method provided by any one of embodiments of the present application.

According to the solution of the present application, the degree of adaptation between the cruise control process of the target driving device of the driving user and the driving user is improved.

It is to be understood that the contents in this section are not intended to identify the key or critical features of the embodiments of the present application, and are not intended to limit the scope of the present application. Other features of the present application will become readily apparent from the following description.

### BRIEF DESCRIPTION OF THE DRAWINGS

The drawings are included to provide a better understanding of the application and are not to be construed as limiting the application. Wherein:
FIG. 1 is a flowchart of a cruise control method according to an embodiment of the present application;
FIG. 2 is a flowchart of a method for determining driving habit weight according to an embodiment of the present application;
FIG. 3 is a flowchart of a cruise control method according to another embodiment of the present application;
FIG. 4 is a flowchart of a cruise control method according to yet another embodiment of the present application;
FIG. 5 is a structural diagram of a cruise control apparatus according to an embodiment of the present application; and
FIG. 6 is a block diagram of an electronic device for implementing the cruise control method according to an embodiment of the present application.

### DETAILED DESCRIPTION

The exemplary embodiments of the present application are described below with reference to the accompanying drawings, wherein the various details of the embodiments of the present application are included to facilitate understanding and are to be considered as exemplary only. Accordingly, a person skilled in the art should appreciate that various changes and modifications can be made to the embodiments described herein without departing from the scope and spirit of the present application. Also, descriptions of well-known functions and structures are omitted from the following description for clarity and conciseness.

The cruise control methods and apparatuses provided in the embodiments of the present application are applicable to the case of performing cruise control on a driving device with automatic driving and human driving functions. The cruise control method provided in the embodiments of the present application may be executed by a cruise control apparatus. The cruise control apparatus is implemented by software and/or hardware, and is specifically configured in electronic device. The electronic device can be configured in the driving device. Exemplarily, the driving device may be a vehicle, a ship, or the like. Correspondingly, the electronic device can be vehicle-mounted equipment, ship-borne equipment, or the like.

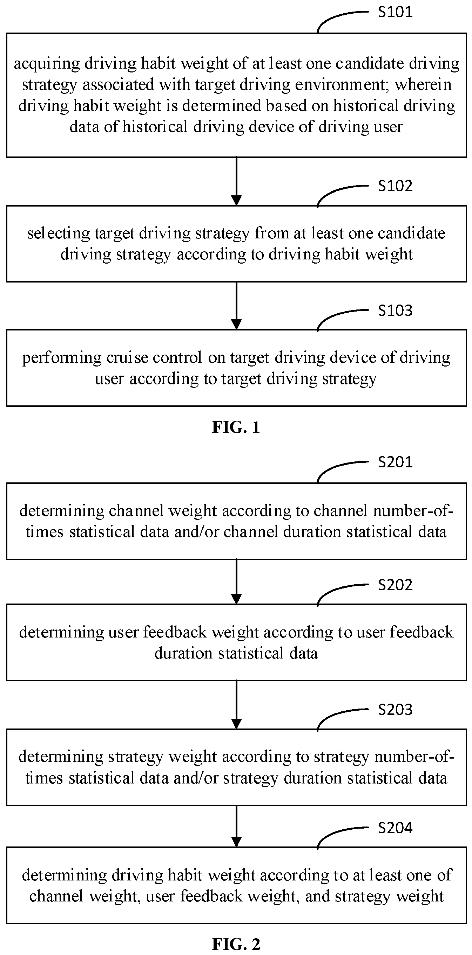

FIG. 1 is a flowchart of a cruise control method according to an embodiment of the present application. The method includes S101-S103.

S101, a driving habit weight of at least one candidate driving strategy associated with a target driving environment is acquired; wherein the driving habit weight is determined based on historical driving data of a historical driving device of a driving user.

The driving environment is used to characterize the external environment where the driving device is in during driving, and may be obtained after data processing based on the data collected by the sensing module, and/or location determination based on a high-precision map. The sensing module may include at least one of sensors such as laser radar, millimeter wave radar, camera, global positioning system, and inertial measurement unit. Exemplarily, the target driving environment can be represented by a driving environment model constructed by driving environment data. Different driving environments correspond to different driving environment models. Optionally, the driving environment data may include at least one of information such as the speed of the driving device itself, the speed of the ahead driving device, the distance from the ahead driving device, the type of the ahead driving device, and the relative position to the driving restraint line. For example, when the driving device is a vehicle, the driving restriction line may be a lane or guardrail.

The driving strategy is used to characterize the control strategy followed by the driving device during driving. In an embodiment, the driving strategy may include at least one strategy of straight driving, right turning, left turning, lane change to the right, lane change to the left, overtaking from the left, overtaking from the right, and stopping moving ahead.

It should be noted that, due to different driving environments of the driving devices, the corresponding candidate driving strategies may be the same or different. For example, in a driving environment where the driving device follows the ahead driving device in a multi-lane straight environment, the driving strategy may include executing at least one of strategies such as lane change to the right, lane change to the left, overtaking from the left, overtaking from the right, and stopping moving ahead, may not include right turning and left turning strategies. Because of the different driving environments of the driving devices, the driving habit weight of each candidate driving strategy is the same or different. For example, in a driving environment where the driving device follows the ahead driving device in a multi-lane straight environment, the driving habit weights corresponding to the right-turn driving strategy and the left-turn driving strategy can be zero, while in a driving environment where the driving device follows the ahead driving device in a T-shaped channel area, at least one of the driving habit weights corresponding to the right-turn driving strategy and the left-turn driving strategy is not zero.

In this embodiment, the driving habit weight is used to characterize the driving habit of the driving user in the target driving environment. Historical driving data is used to characterize the data generated by the historical driving device when the driving user is manually or semi-automatically driving the historical driving device.

Optionally, the driving habit weight of each candidate driving strategy associated with the target driving environment can be stored locally in the electronic device, in other storage devices associated with the electronic device, or in the cloud. Correspondingly, it can be searched and obtained from the electronic device locally, from other storage devices associated with the electronic device, or from the cloud.

In an embodiment, there is a situation where one driving device is used by multiple driving users. Because the driving habits of different driving users have certain differences, the driving habits parameters of each candidate driving strategy must be different for different driving users in different driving environments. In order to enable adaptation of a driving device to a scene with multiple driving users and improve the degree of matching with the driving user during cruise control of the target driving device in this scene, acquiring the driving habit weight of at least one candidate driving strategy associated with the target driving environment, may be: acquiring the driving habit weight of at least one candidate driving strategy associated with the driving user in the target driving environment.

It can be understood that, by distinguishing the driving habit weights according to the driving users and the driving environments, acquiring needs of the driving habit weights for different driving users and different driving environments can be adapted, which lays the foundation for the improvement of the matching between the final cruise control process and the driving user.

S102, a target driving strategy from the at least one candidate driving strategy is selected according to the driving habit weight.

In an optional embodiment, selecting the target driving strategy from at least one candidate driving strategy according to the driving habit weight, may be: from the at least one candidate driving strategy, selecting a candidate driving strategy with a higher driving habit weight as the target driving strategy, which is used to provide data support for the cruise control of the driving user's target driving device.

It should be noted that because there may be some bad driving habits in the driving habits of the driving user, the driving habit weight determined based on the historical driving data of the driving user's historical driving device may present a situation of approving bad driving behaviors, thereby posing a certain threat to the driving safety of the driving user. In order to avoid the occurrence of the above situation, the standard decision weight can be introduced to modify the driving habit weight.

In another optional embodiment, selecting the target driving strategy from at least one candidate driving strategy according to the driving habit weight, may be: adjusting the driving habit weight according to the standard decision weight of the candidate driving strategy; and selecting the target driving strategy from the at least one candidate driving strategy according to the adjusted driving habit weight.

The standard decision weight can be understood as the weight determined for each candidate driving strategy based on consideration of factors such as safety in the target driving environment. The candidate driving strategy with higher safety in the target driving environment has a higher standard decision weight; and the candidate driving strategy with lower safety in the target driving environment has a lower standard decision weight.

It should be noted that the standard decision weight of each candidate driving strategy can be set by technical personnel according to needs or empirical values, or determined through a large number of trial and error, or determined by the existing weight determination mechanism. The embodiments of the present application do not make any limitation on the method for determining the standard decision weight of each candidate driving strategy.

Exemplarily, the driving habit weight can be calculated according to the standard decision weight of the candidate driving strategy to obtain the adjusted driving habit weight; and from the at least one candidate driving strategy, a candidate driving strategy with a higher adjusted driving habit weight is selected as the target driving strategy.

Optionally, according to the standard decision weight of the candidate driving strategy, the operation performed on the driving habit weight may be implemented by way of addition operation or multiplication operation.

S103, a cruise control on a target driving device of the driving user is performed according to the target driving strategy.

The target driving device can be understood as the target driving device used by the driving user in the target driving environment.

Optionally, the target driving device may be the same as the historical driving device. That is, when determining the target driving strategy, the driving habit weight determined by the driving user in the historical driving data of the target driving device is used to determine the target driving strategy, and then perform cruise control on the target driving device. It should be noted that when the number of historical driving devices is at least one, the target driving device can be one of the historical driving devices.

Alternatively, the target driving device may be different from the historical driving device. For example, the driving habit weight determined by the historical driving data when the driving user A drives the vehicle a is migrated to a cruise control scene of the vehicle b where the driving user A is located, so as to realize the cruise control of the vehicle b.

Exemplarily, according to the target driving strategy, the driving route is planned again, and the target driving device is subjected to cruise control such as going straight, steering, or stopping moving ahead according to the planned driving route. Wherein, the steering includes at least one of left turning, right turning, lane change to the left, lane change to the right, overtaking from the left, overtaking from the right.

Optionally, cruise control is performed on the target driving device of the driving user according to the target driving strategy. In order to facilitate the driving user to know the driving situation of the target driving device in time, it is also possible to feedback the target driving strategy to the driving user before or when performing cruise control on the target driving device of the driving user. In order to avoid frequent feedback of the target driving strategy to the driving user and bring a poor user experience to the driving user, optionally, the target driving strategy can be compared with the original driving strategy currently used; in a case that the target driving strategy is different from the original driving strategy, the target driving strategy is fed back to the driving user.

In the embodiments of the present application, a driving habit weight of at least one candidate driving strategy associated with a target driving environment is acquired; wherein the driving habit weight is determined based on historical driving data of a historical driving device of a driving user; a target driving strategy from the at least one candidate driving strategy is selected according to the driving habit weight; and a cruise control on a target driving device of the driving user is performed according to the target driving strategy. In the embodiments of the application, the target driving strategy is determined by introducing the driving habit weight determined based on the historical driving data of the historical driving device of the driving user, so that the determined target driving strategy can be adapted to the driving habit of the driving user in the target driving environment, which improves the adaptability of the driving user's target driving device to the driving user when performing cruise control on the driving user's target driving device, thereby improving the driving user's experience when being in the target driving device.

On the basis of the above technical solutions, the determining operation of the driving habit weight can be pre-executed, or it can be determined before the driving habit weight is used during the cruise control.

The embodiments of the present application further provides a method for determining driving habit weight, which is used to determine the driving habit weight of the candidate driving strategy associated with the target driving environment during cruise control.

Exemplarily, the driving habit weight may be determined based on the historical driving data of the historical driving device of the driving user.

In an embodiment, the historical driving data may include at least one of the following: channel number-of-times statistical data of the number of times of driving of the historical driving device in each of channels, wherein channel attributes of different channels are different; channel duration statistical data of a driving duration of the historical driving device in each of the channels; user feedback duration statistical data of the historical driving device during making strategy changes; strategy number-of-times statistical data of a number of times of driving of the historical driving device in each candidate driving strategy; and strategy duration statistical data of a driving duration of the historical driving device in each candidate driving strategy. Here, the channel may include, but is not limited to, a waterway for ships, or a lane for vehicles, etc.

Exemplarily, the channel number-of-times statistical data of the number of times of driving of the historical driving device in each of the channels is used to characterize the driving user's preference for channels with different channel attributes from the dimension of the number of times of driving. The channel attributes may include at least one of channel width, allowable passing speed, and channel position in parallel channels. For example, in a case that user A drives a historical vehicle in three parallel lanes, he usually drives in a lane with a lower speed, then the number-of-times statistical data in the lane with the lower speed is higher, and the number-of-times statistical data in the lane with the higher speed is lower.

Exemplarily, the channel duration statistical data of the driving duration of the historical driving device in each of the channels is used to characterize the driving user's preference for channels with different channel attributes from the dimension of the driving duration. For example, in a case that user A is driving a historical vehicle in three parallel lanes, he will usually drive in a lane with a lower speed, then the duration statistical data in the lane with the lower speed is higher, and the duration statistical data in the lane with the higher speed is lower.

Exemplarily, the user feedback duration statistical data of the historical driving device during making strategy changes is used to characterize the driving user's preference for each candidate driving strategy from the dimension of the user decision. For example, when user A is driving a historical vehicle, the historical vehicle is determined and the target driving strategy is determined and they are fed back to user A to determine whether to execute them, in a case that user A's feedback duration is longer, it means user A has a lower preference for the target driving strategy; and in a case that user A's feedback duration is shorter, it means that user A has a higher preference for the target driving strategy.

Exemplarily, strategy number-of-times statistical data of the number of times of driving of the historical driving device in each candidate driving strategy is used to characterize the driving user's preference for the candidate driving strategy from the dimension of the number-of-times of strategy executions. For example, when user A is driving a historical vehicle, in a case that the historical vehicle has used a certain candidate driving strategy for greater cumulative number-of-times, it indicates that user A has a higher preference for this candidate driving strategy; in a case that the historical vehicle has used a certain candidate driving strategy for less cumulative number-of-times, it indicates that user A has a lower preference for this candidate driving strategy.

Exemplarily, strategy duration statistical data of a driving duration of the historical driving device in each candidate driving strategy is used to characterize the driving user's preference for the candidate driving strategy from the dimension of the strategy execution duration. For example, when user A is driving a historical vehicle, in a case that the historical vehicle has used a certain candidate driving strategy for greater cumulative duration, it indicates that user A has a higher preference for the candidate driving strategy; in a case that the historical vehicle has used a certain candidate driving strategy for less cumulative duration, it indicates that user A has a lower preference for the candidate driving strategy.

The historical driving data exemplarily given above can enrich the determining mechanism of the driving habit weight. On the basis of the above technical solution, in an optional embodiment of the present application, FIG. 2 exemplarily shows a method for determining driving habit weight, and the method includes S201-S204.

S201, a channel weight is determined according to the channel number-of-times statistical data and/or the channel duration statistical data.

Exemplarily, a first channel selection frequency corresponding to the channels of different channel attributes can be determined according to the channel number-of-times statistical data; a second channel selection frequency corresponding to the channels of different channel attributes can be determined according to the channel duration statistical data; and the channel weight is determined according to the first channel selection frequency and/or the second channel selection frequency.

Optionally, the first channel selection frequency may be directly used as the channel weight, or the second channel selection frequency may be used as the channel weight, or the weighted sum of the first channel selection frequency and the second channel selection frequency may be used as the channel weight. Here, the weighted weight of the first channel selection frequency and the second channel selection frequency can be determined by a technician according to needs or empirical values. It should be noted that the foregoing method only exemplarily provides a method for determining the channel weight, and other methods may also be used to determine the channel weight, which is not limited in the embodiments of the present application.

S202, a user feedback weight is determined according to the user feedback duration statistical data.

Exemplarily, the user feedback weight of each candidate driving strategy may be determined according to a preset feedback weight determining function and according to the user feedback duration statistical data. Here, the preset feedback weight determination function is a decreasing function of the user feedback duration statistical data, that is, as the user feedback duration increases, the user feedback weight becomes smaller.

Exemplarily, the proportion of the feedback duration corresponding to each candidate driving strategy can also be determined according to the user feedback duration statistical data; and the user feedback weight of each candidate driving strategy can be determined according to the proportion of feedback duration; here, the user feedback weight decreases as the proportion of the feedback duration increases.

It should be noted that the foregoing method only exemplarily provides a method for determining the user feedback weight, and other methods may also be used to determine the user feedback weight, which is not limited in the embodiments of the present application.

S203, a strategy weight is determined according to the strategy number-of-times statistical data and/or the strategy duration statistical data.

Exemplarily, the first strategy selection frequency corresponding to each candidate driving strategy may be determined according to the strategy number-of-times statistical data; the second strategy selection frequency corresponding to each candidate driving strategy may be determined according to the strategy duration statistical data; the strategy weight is determined according to the first strategy selection frequency and/or the second strategy selection frequency.

Optionally, the first strategy selection frequency may be directly used as the strategy weight; the second strategy selection frequency may be used as the strategy weight; or a weighted sum of the first strategy selection frequency and the second strategy selection frequency may be used as strategy weight. Here, a weighted weight of the first strategy selection frequency and the second strategy selection frequency can be determined by a technician according to needs or experience values. It should be noted that the above method only exemplarily gives the method for determining the strategy weight, and other methods may also be used to determine the strategy weight, which is not limited in the embodiments of the present application.

S204, the driving habit weight is determined according to at least one of the channel weight, the user feedback weight, and the strategy weight.

Exemplarily, the channel weight of each candidate driving strategy is determined according to the current driving channel of the target driving device in the target driving environment and the corresponding target driving channel after using each candidate driving strategy; and the driving habit weight of each candidate driving strategy is determined according to at least one of the channel weight, the user feedback weight and the strategy weight of each candidate driving strategy.

Optionally, one of the channel weight, the user feedback weight and the strategy weight of each candidate driving strategy is directly used as the driving habit weight.

Alternatively, at least two of the channel weight, the user feedback weight, and the strategy weight of each candidate driving strategy are processed, and the processing result is used as the driving habit weight of each candidate driving strategy. Here, the value of driving habit weight increases as the channel weight, the user feedback weight and the strategy weight of the candidate driving strategy increase.

Exemplarily, processing at least two of the channel weight, the user feedback weight, and the strategy weight of each candidate driving strategy can be implemented by using at least one of a weighting operation, a product operation, and an exponentiation operation.

In the embodiments of the present application, at least one of the channel number-of-times statistical data, the channel duration statistical data, the user feedback duration statistical data, the strategy number-of-times statistical data, and the strategy duration statistical data is introduced to determine the driving habit weight, which improves the determination mechanism of the driving habit weight, so that the finally determined driving habit weight can characterize the driving habits of the driving user from different dimensions and different levels, thereby laying the foundation for the improvement of the matching between the target driving strategy determined based on the driving habit parameters and the driving user.

On the basis of the above technical solutions, when the target driving device is a historical driving device, in order to determine the driving habit weight of the driving user in the target driving device, two different driving models can also be set in the target driving device in advance, a learning mode and a routine mode. When the target driving device is in the routine mode, the target driving device enters the autopilot cruise control state. When the target driving device is in the learning mode, the target driving device enters the learning state of the driving user's driving habits, which lays the foundation for the subsequent cruise control of the target driving device.

In an embodiment, in a case that the current driving mode is the learning mode, the operation "performing the cruise control of the target driving device of the driving user according to the driving strategy" is specified into "feeding back the target driving strategy to the driving user, and receiving a feedback instruction from the driving user; and performing the cruise control on the target driving device of the driving user according to the feedback instruction, and updating the driving habit weight according to newly generated driving data", which improves the cruise control mechanism of the target driving device.

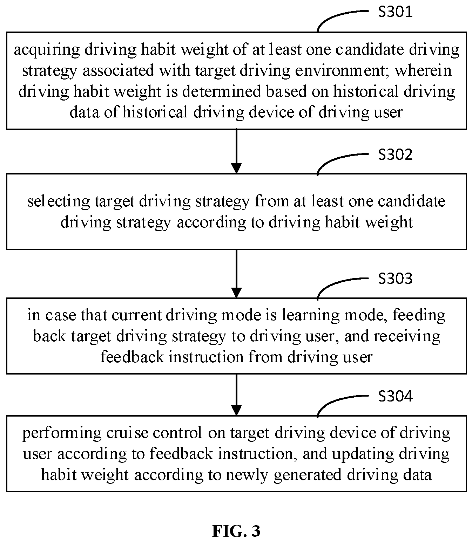

FIG. 3 shows another cruise control method. The cruise control method includes S301-S304.

S301, a driving habit weight of at least one candidate driving strategy associated with a target driving environment is acquired; wherein the driving habit weight is determined based on historical driving data of a historical driving device of a driving user.

S302, a target driving strategy is selected from the at least one candidate driving strategy according to the driving habit weight.

S303, in a case that the current driving mode is a learning mode, the target driving strategy is fed back to the driving user, and a feedback instruction is received from the driving user.

In a case that the current driving mode is a learning mode, the target driving strategy is fed back to the driving user; and the driving user responds to the target driving strategy, and a feedback instruction is generated.

Wherein, the feedback instruction may be an approval instruction, which is used to indicate approval of the target driving strategy; the feedback instruction may also be a rejection instruction, which is used to indicate disapproval of the target driving strategy. In order to avoid misoperation of the driving user, when the target driving strategy is fed back to the driving user, at least one of the methods such as voice broadcast, text display, and video display may be used to be implemented. After receiving the feedback instruction of the driving user, the feedback instruction of the driving user may be displayed by using at least one of voice broadcast, text display, and video display.

S304, the cruise control is performed on the target driving device of the driving user according to the feedback instruction, and the driving habit weight is updated according to newly generated driving data.

Exemplarily, performing the cruise control on the target driving device of the driving user according to the feedback instruction may be: performing the cruise control on the target driving device of the driving user according to the target driving strategy in a case that the feedback instruction is an approval instruction; and prohibiting to perform the cruise control on the target driving device of the driving user according to the target driving strategy in a case that the feedback instruction is a rejection instruction.

Optionally, prohibiting to perform the cruise control on the target driving device of the driving user according to the target driving strategy may be: performing the cruise control on the target driving device of the driving user according to the original driving strategy; the original driving strategy can be understood as the driving strategy adopted before determining the target driving strategy. Alternatively, prohibiting to perform the cruise control on the target driving device of the driving user according to the target driving strategy may also be: performing the cruise control on the target driving device of the driving user by adopting a default driving strategy or a driving strategy specified by the driving user.

For example, when the target vehicle is driving straight and the determined target driving strategy is to overtake from the right, in a case that the feedback instruction of the driving user is an approval instruction, the target vehicle is controlled to overtake from the right. In a case that the feedback instruction of the driving user is a rejection instruction, the original straight driving strategy is unchanged; or else, a default strategy is acquired, in a case that the default strategy is to overtake from the left, the target vehicle is controlled to overtake from the left; or else, a driving strategy specified by the driving user is acquired, in a case that the specified driving strategy is to overtake from the left, the target vehicle is controlled to overtake from the left.

It can be understood that the foregoing technical solution adopts different optional methods to perform cruise control on the target driving device according to the approval instruction or the rejection instruction, which improves the cruise control mechanism for the target driving device.

Exemplarily, the driving habit weight is updated according to the newly generated driving data, and the newly generated driving data is directly used as the historical driving data of the target driving device, and the driving habit weight is redetermined or updated.

In the embodiments of the application, a learning mode is introduced in the target driving device. In the learning mode, cruise control is performed on the target driving device according to the feedback instruction of the driving user to the target driving strategy, which realizes the online learning of driving user's driving habits during the driving process of the target driving device, thereby laying the foundation for subsequent cruise control of the target driving device or cruise control of other driving devices.

On the basis of the above-mentioned technical solutions, the embodiments of the present application also provide a preferred embodiment for performing cruise control on a target vehicle driving in a lane.

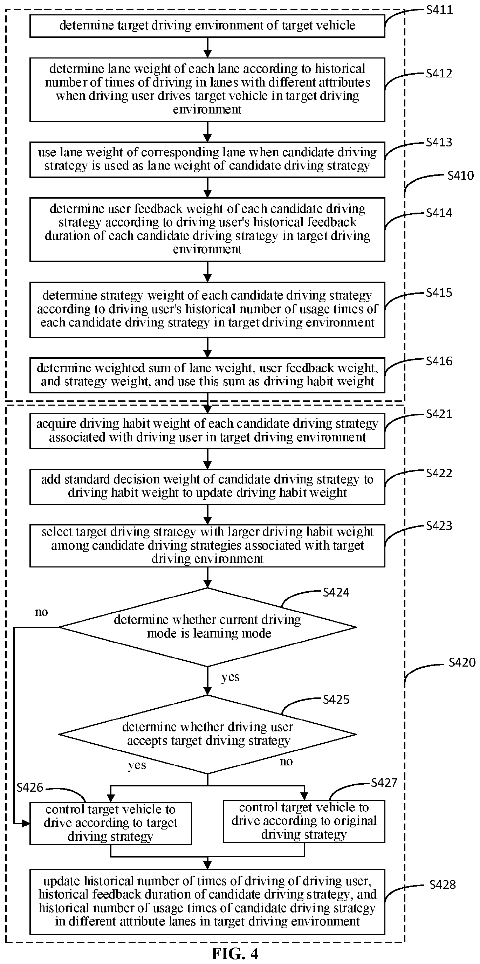

FIG. 4 shows yet another cruise control method applied on a target vehicle. The cruise control method includes S410-S420.

S410 is a driving habit weight determining phase; and

S420 is a cruise control phase.

Exemplarily, the driving habit weight determination phase includes S411-S416.

S411, determine the target driving environment of the target vehicle.

S412, determine the lane weight of each lane according to the historical number of times of driving in lanes with different attributes when the driving user drives the target vehicle in the target driving environment.

S413, use the lane weight of the corresponding lane when the candidate driving strategy is used as the lane weight of the candidate driving strategy.

Here, the candidate driving strategy includes at least one of the strategies including: straight driving, right turning, left turning, lane change to the right, lane change to the left, overtaking from the left, overtaking from the right, and stopping moving ahead.

S414, determine the user feedback weight of each candidate driving strategy according to the driving user's historical feedback duration of each candidate driving strategy in the target driving environment.

S415, determine the strategy weight of each candidate driving strategy according to the driving user's historical number of usage times of each candidate driving strategy in the target driving environment.

S416, determine the weighted sum of the lane weight, the user feedback weight, and the strategy weight, and use this sum as the driving habit weight.

Exemplarily, the cruise control phase includes S421-S428.

S421, acquire the driving habit weight of each candidate driving strategy associated with the driving user in the target driving environment.

S422, add the standard decision weight of the candidate driving strategy to the driving habit weight to update the driving habit weight.

S423, select the target driving strategy with the larger driving habit weight among the candidate driving strategies associated with the target driving environment.

S424, determine whether the current driving mode is the learning mode; if yes, execute S425; otherwise, execute S426.

In a case that the current driving mode is the learning mode, the target driving strategy is fed back to the driving user, and the driving user decides whether to perform cruise control on the target vehicle according to the target driving strategy; and in a case that the current driving mode is a non-learning mode, that is, the routine mode, the cruise control is performed on the target vehicle directly based on the target driving strategy.

S425, determine whether the driving user accepts the target driving strategy; if yes, execute S426; otherwise, execute S427.

S426, control the target vehicle to drive according to the target driving strategy. Continue to execute S428.

S427, control the target vehicle to drive according to the original driving strategy. Continue to execute S428.

S428, update the historical number of times of driving of the driving user, the historical feedback duration of the candidate driving strategy, and the historical number of usage times of the candidate driving strategy in different attribute lanes in the target driving environment.

In the embodiments of the present application, the candidate driving strategy is determined by introducing driving habit parameters, so that the final determined target driving strategy can be adapted to the driving habits of the driving user in different driving environments, so that the vehicle cruise control process can satisfy the driving user's individual needs.

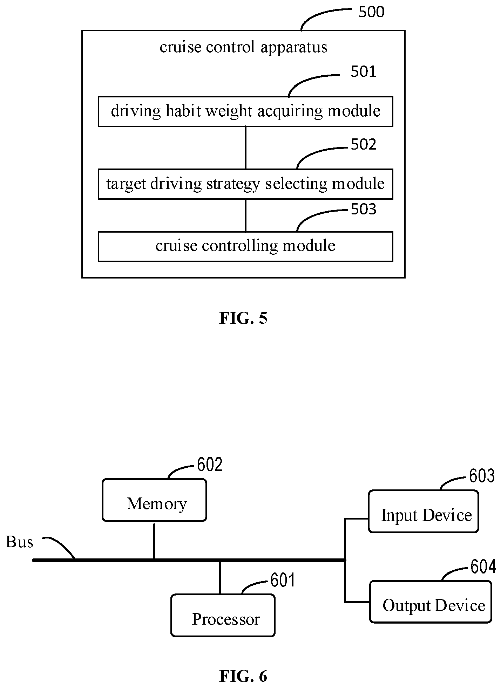

In order to implement the methods shown in the above figures, the present application also provides an embodiment of a virtual apparatus that implements the cruise control method. Further refer to a cruise control apparatus 500 shown in FIG. 5, which includes: a driving habit weight acquiring module 501, a target driving strategy selecting module 502, and a cruise controlling module 503.

The driving habit weight acquiring module 501 is configured for acquiring a driving habit weight of at least one candidate driving strategy associated with a target driving environment; wherein the driving habit weight is determined based on historical driving data of a historical driving device of a driving user.

The target driving strategy selecting module 502 is configured for selecting a target driving strategy from the at least one candidate driving strategy according to the driving habit weight.

The cruise controlling module 503 is configured for performing a cruise control on a target driving device of the driving user according to the target driving strategy.

In the embodiments of the present application, the driving habit weight acquiring module acquires driving habit weight of at least one candidate driving strategy associated with a target driving environment; wherein the driving habit weight is determined based on historical driving data of a historical driving device of a driving user; the target driving strategy selecting module selects a target driving strategy from the at least one candidate driving strategy according to the driving habit weight; and the cruise controlling module performs a cruise control on a target driving device of the driving user according to the target driving strategy. In the embodiments of the application, the target driving strategy is determined by introducing the driving habit weight determined based on the historical driving data of the historical driving device of the driving user, so that the determined target driving strategy can be adapted to the driving habit of the driving user in the target driving environment, which improves the adaptability of the driving user's target driving device to the driving user when performing cruise control on the driving user's target driving device, thereby improving the driving user's experience when being in the target driving device.

Further, the historical driving data includes at least one of:

channel number-of-times statistical data of a number of times of driving of the historical driving device in each of channels; wherein channel attributes of different channels are different;

channel duration statistical data of a driving duration of the historical driving device in each of the channels;

user feedback duration statistical data of the historical driving device during making strategy changes;

strategy number-of-times statistical data of a number of times of driving of the historical driving device in each candidate driving strategy; and

strategy duration statistical data of a driving duration of the historical driving device in each candidate driving strategy.

Further, the apparatus further includes a driving habit weight determining module configured for determining the driving habit weight;

wherein the driving habit weight determining module includes:

a channel weight determining unit, configured for determining a channel weight according to the channel number-of-times statistical data and/or the channel duration statistical data;

a user feedback weight determining unit, configured for determining a user feedback weight according to the user feedback duration statistical data;

a strategy weight determining unit, configured for determining a strategy weight according to the strategy number-of-times statistical data and/or the strategy duration statistical data; and

a driving habit weight determining unit, configured for determining the driving habit weight according to at least one of the channel weight, the user feedback weight, and the strategy weight.

Further, the target driving strategy selecting module 502 includes:

a driving habit weight adjusting unit, configured for adjusting the driving habit weight according to a standard decision weight of the candidate driving strategy; and

a target driving strategy selecting unit, configured for selecting the target driving strategy from the at least one candidate driving strategy according to the adjusted driving habit weight.

Further, in a case that current driving mode is a learning mode, the cruise controlling module 503 includes:

a feedback receiving unit, configured for feeding back the target driving strategy to the driving user, and receiving a feedback instruction from the driving user; and

a cruise controlling unit, configured for performing the cruise control on the target driving device of the driving user according to the feedback instruction, and updating the driving habit weight according to newly generated driving data.

Further, the cruise controlling unit includes:

a cruise control approving sub-unit, configured for performing the cruise control on the target driving device of the driving user according to the target driving strategy, in a case that the feedback instruction is an approval instruction; and

a cruise control rejecting sub-unit, configured for prohibiting to perform the cruise control on the target driving device of the driving user according to the target driving strategy, in a case that the feedback instruction is a rejection instruction.

Further, the driving habit weight acquiring module 501 includes:

a driving habit weight acquiring unit, configured for acquiring the driving habit weight of the at least one candidate driving strategy associated with the driving user in the target driving environment.

Further, the candidate driving strategy includes at least one of: straight driving, right turning, left turning, lane change to the right, lane change to the left, overtaking from the left, overtaking from the right, and stopping moving ahead.

The aforementioned cruise control apparatus can execute the cruise control method provided by any one of embodiments of the present application, and has corresponding functional modules and beneficial effects for executing the cruise control method.

According to the embodiments of the present application, the present application also provides an electronic device and a readable storage medium.

FIG. 6 is a block diagram of an electronic device for implementing the cruise control method according to an embodiment of the present application. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processing, cellular telephones, smart phones, wearable devices, and other similar computing devices. The components shown herein, their connections and relationships, and their functions are by way of example only and are not intended to limit the implementations of the present application described and/or claimed herein.

As shown in FIG.6, the electronic device includes: one or more processors 601, memory 602, and interfaces for connecting various components, including high-speed interfaces and low-speed interfaces. The various components are interconnected using different buses and may be mounted on a common motherboard or otherwise as desired. The processor may process instructions for execution within the electronic device, including instructions stored in the memory or on the memory to display graphical information of a Graphical User Interface (GUI) on an external input/output device, such as a display apparatus coupled to the interface. In other embodiments, multiple processors and/or multiple buses and multiple memories may be used with multiple memories if desired. Similarly, multiple electronic devices may be connected, each providing part of the necessary operations (e.g., as an array of servers, a set of blade servers, or a multiprocessor system). In FIG. 6, one processor 601 is taken as an example.

The memory 602 is a non-transitory computer-readable storage medium provided by the present application. The memory stores instructions executable by at least one processor to enable the at least one processor to implement the cruise control method provided by the present application. The non-transitory computer-readable storage medium of the present application stores computer instructions for enabling a computer to implement the cruise control method provided by the present application.

The memory 602, as a non-transitory computer-readable storage medium, may be used to store non-transitory software programs, non-transitory computer-executable programs, and modules, such as program instructions/modules (e.g., the driving habit weight acquiring module 501, the target driving strategy selecting module 502 and the cruise controlling module 503 shown in FIG. 5) corresponding to the cruise control method according to embodiments of the present application. The processor 601 executes various functional applications of the server and data processing, i.e., achieving the cruise control method in the above-mentioned method embodiment, by operating non-transitory software programs, instructions, and modules stored in the memory 602.

The memory 602 may include a program storage area and a data storage area, wherein the program storage area may store an application program required by an operating system and at least one function; the data storage area may store data created according to the use of the electronic device for implementing the cruise control method, etc. In addition, the memory 602 may include high speed random access memory, and may also include a non-transitory memory, such as at least one magnetic disk storage apparatus, a flash memory apparatus, or other non-transitory solid state memory apparatus. In some embodiments, the memory 602 may optionally include memories remotely located with respect to processor 601, which may be connected via a network to the electronic device for implementing the cruise control method. Examples of such networks include, but are not limited to, the Internet, intranet, local area networks, mobile communication networks, and combinations thereof.

The electronic device for implementing the cruise control method may further include: an input device 603 and an output device 604. The processor 601, the memory 602, the input device 603, and the output device 604 may be connected via a bus or otherwise. FIG. 6 takes a bus connection as an example.

The input device 603 may receive input numeric or character information and generate key signal inputs related to user settings and functional controls of the electronic apparatus for implementing the cruise control method, such as input devices including touch screens, keypads, mice, track pads, touch pads, pointing sticks, one or more mouse buttons, track balls, joysticks, etc. The output devices 604 may include display devices, auxiliary lighting devices (e.g., LEDs), tactile feedback devices (e.g., vibration motors), and the like. The display apparatus may include, but is not limited to, a Liquid Crystal Display (LCD), a Light Emitting Diode (LED) display, and a plasma display. In some embodiments, the display apparatus may be a touch screen.

Various embodiments of the systems and techniques described herein may be implemented in digital electronic circuit systems, integrated circuit systems, Application Specific Integrated Circuits (ASICs), computer hardware, firmware, software, and/or combinations thereof. These various embodiments may include: implementation in one or more computer programs which can be executed and/or interpreted on a programmable system including at least one programmable processor, and the programmable processor may be a dedicated or general-purpose programmable processor which can receive data and instructions from, and transmit data and instructions to, a memory system, at least one input device, and at least one output device.

These computing programs (also referred to as programs, software, software applications, or code) include machine instructions of a programmable processor, and may be implemented using high-level procedural and/or object-oriented programming languages, and/or assembly/machine languages. As used herein, the terms "machine-readable medium" and "computer-readable medium" refer to any computer program product, device, and/or apparatus (e.g., magnetic disk, optical disk, memory, programmable logic apparatus (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide an interaction with a user, the systems and techniques described herein may be implemented on a computer having: a display apparatus (e.g., a Cathode Ray Tube (CRT) or Liquid Crystal Display (LCD) monitor) for displaying information to a user; and a keyboard and a pointing apparatus (e.g., a mouse or a trackball) by which a user can provide input to the computer. Other types of devices may also be used to provide interaction with a user; for example, the feedback provided to the user may be any form of sensory feedback (e.g., visual feedback, audile feedback, or tactile feedback); and input from the user may be received in any form, including acoustic input, audio input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or in a computing system that includes any combination of such background component, middleware component, or front-end component. The components of the system may be interconnected by digital data communication (e.g., a communication network) of any form or medium. Examples of the communication networks include: Local Area Networks (LANs), Wide Area Networks (WANs), Internet, and blockchain network.

The computer system may include a client and a server. The client and the server are typically remote from each other and typically interact through a communication network. A relationship between the client and the server is generated by computer programs operating on respective computers and having a client-server relationship with each other. The server may be a cloud server, also known as a cloud computing server or cloud host. It is a host product in the cloud computing service system to solve the defects including difficult management and weak business scalability existed in traditional physical host and Virtual Private Server (VPS) services.

According to the technical solutions of the embodiments of the present application, by introducing the driving habit weight determined based on the historical driving data of the historical driving device of the driving user, the target driving strategy is determined, so that the determined target driving strategy can be adapted to the driving habit of the driving user in the target driving environment, which improves the adaptability of the driving user's target driving device to the driving user when a cruise control is performed on the driving user's target driving device, thereby improving the driving user's experience when the driving user drives the target driving device.

Embodiments of the present application also provide a vehicle, the vehicle is provided with an electronic device as shown in FIG. 6, and the electronic device may be a vehicle-mounted terminal or a mobile terminal.

It will be appreciated that the various forms of flow, reordering, adding or removing steps shown above may be used. For example, the steps recited in the present application may be performed in parallel or sequentially or may be performed in a different order, so long as the desired results of the technical solutions disclosed in the present application can be achieved, and no limitation is made herein.

The above-mentioned embodiments are not to be construed as limiting the scope of the present application. It will be apparent to a person skilled in the art that various modifications, combinations, sub-combinations and substitutions are possible, depending on design requirements and other factors. Any modifications, equivalents, and improvements within the spirit and principles of this application are intended to be included within the scope of the present application.

## Claims

1. A cruise control method, comprising:
acquiring (S101) a driving habit weight of at least one candidate driving strategy associated with a target driving environment; wherein the driving habit weight is determined based on historical driving data of a historical driving device of a driving user;
selecting (S102) a target driving strategy from the at least one candidate driving strategy according to the driving habit weight; and
performing (S 1 03) a cruise control on a target driving device of the driving user according to the target driving strategy.

2. The method of claim 1, wherein the historical driving data comprises at least one of:
channel number-of-times statistical data of a number of times of driving of the historical driving device in each of channels; wherein channel attributes of different channels are different;
channel duration statistical data of a driving duration of the historical driving device in each of the channels;
user feedback duration statistical data of the historical driving device during making strategy changes;
strategy number-of-times statistical data of a number of times of driving of the historical driving device in each candidate driving strategy; and
strategy duration statistical data of a driving duration of the historical driving device in each candidate driving strategy,
preferably, the driving habit weight is determined in a way of:
determining (S201) a channel weight according to the channel number-of-times statistical data and/or the channel duration statistical data;
determining (S202) a user feedback weight according to the user feedback duration statistical data;
determining (S203) a strategy weight according to the strategy number-of-times statistical data and/or the strategy duration statistical data; and
determining (S204) the driving habit weight according to at least one of the channel weight, the user feedback weight, and the strategy weight.

3. The method of any one of claims 1 to 2, wherein the selecting the target driving strategy from the at least one candidate driving strategy according to the driving habit weight, comprises:
adjusting the driving habit weight according to a standard decision weight of the candidate driving strategy; and
selecting the target driving strategy from the at least one candidate driving strategy according to the adjusted driving habit weight.

4. The method of any one of claims 1 to 3, wherein the performing the cruise control on the target driving device of the driving user according to the target driving strategy, comprises: in a case that a current driving mode is a learning mode,
feeding back (S303) the target driving strategy to the driving user, and receiving a feedback instruction from the driving user; and
performing (S304) the cruise control on the target driving device of the driving user according to the feedback instruction, and updating the driving habit weight according to newly generated driving data,
preferably, the performing the cruise control on the target driving device of the driving user according to the feedback instruction, comprises:
performing the cruise control on the target driving device of the driving user according to the target driving strategy, in a case that the feedback instruction is an approval instruction; and
prohibiting to perform the cruise control on the target driving device of the driving user according to the target driving strategy, in a case that the feedback instruction is a rejection instruction.

5. The method of any one of claims 1 to 4, wherein the acquiring the driving habit weight of the at least one candidate driving strategy associated with the target driving environment, comprises: acquiring the driving habit weight of the at least one candidate driving strategy associated with the driving user in the target driving environment,
optionally, the candidate driving strategy includes at least one of: straight driving, right turning, left turning, lane change to the right, lane change to the left, overtaking from the left, overtaking from the right, and stopping moving ahead.

6. A cruise control apparatus (500), comprising:
a driving habit weight acquiring module (501), configured for acquiring a driving habit weight of at least one candidate driving strategy associated with a target driving environment; wherein the driving habit weight is determined based on historical driving data of a historical driving device of a driving user;
a target driving strategy selecting module (502), configured for selecting a target driving strategy from the at least one candidate driving strategy according to the driving habit weight; and
a cruise controlling module (503), configured for performing a cruise control on a target driving device of the driving user according to the target driving strategy.

7. The apparatus of claim 6, wherein the historical driving data comprises at least one of:
channel number-of-times statistical data of a number of times of driving of the historical driving device in each of channels; wherein channel attributes of different channels are different;
channel duration statistical data of a driving duration of the historical driving device in each of the channels;
user feedback duration statistical data of the historical driving device during making strategy changes;
strategy number-of-times statistical data of a number of times of driving of the historical driving device in each candidate driving strategy; and
strategy duration statistical data of a driving duration of the historical driving device in each candidate driving strategy,
perferably, the apparatus further comprises: a driving habit weight determining module, configured for determining the driving habit weight;
wherein the driving habit weight determining module comprises:
a channel weight determining unit, configured for determining a channel weight according to the channel number-of-times statistical data and/or the channel duration statistical data;
a user feedback weight determining unit, configured for determining a user feedback weight according to the user feedback duration statistical data;
a strategy weight determining unit, configured for determining a strategy weight according to the strategy number-of-times statistical data and/or the strategy duration statistical data; and
a driving habit weight determining unit, configured for determining the driving habit weight according to at least one of the channel weight, the user feedback weight, and the strategy weight.

8. The apparatus of any one of claims 6 to 7, wherein the target driving strategy selecting module comprises:
a driving habit weight adjusting unit, configured for adjusting the driving habit weight according to a standard decision weight of the candidate driving strategy; and
a target driving strategy selecting unit, configured for selecting the target driving strategy from the at least one candidate driving strategy according to the adjusted driving habit weight.

9. The apparatus of any one of claims 6 to 8, wherein in a case that a current driving mode is a learning mode, the cruise controlling module comprises:
a feedback receiving unit, configured for feeding back the target driving strategy to the driving user, and receiving a feedback instruction from the driving user; and
a cruise controlling unit, configured for performing the cruise control on the target driving device of the driving user according to the feedback instruction, and updating the driving habit weight according to newly generated driving data,
preferably, the cruise controlling unit comprises:
a cruise control approving sub-unit, configured for performing the cruise control on the target driving device of the driving user according to the target driving strategy, in a case that the feedback instruction is an approval instruction; and
a cruise control rejecting sub-unit, configured for prohibiting to perform the cruise control on the target driving device of the driving user according to the target driving strategy, in a case that the feedback instruction is a rejection instruction.

10. The apparatus of any one of claims 6 to 9, wherein the driving habit weight acquiring module comprises: a driving habit weight acquiring unit, configured for acquiring the driving habit weight of the at least one candidate driving strategy associated with the driving user in the target driving environment.
optionally, the candidate driving strategy comprises at least one of: straight driving, right turning, left turning, lane change to the right, lane change to the left, overtaking from the left, overtaking from the right, and stopping moving ahead.

11. An electronic device, comprising:
at least one processor (601); and
a memory (602) communicatively connected to the at least one processor; wherein,
the memory stores instructions executable by the at least one processor to enable the at least one processor to implement the cruise control method of any one of claims 1 to 8.

12. A vehicle, wherein the vehicle is provided with the electronic device of claim 11.

13. A non-transitory computer-readable storage medium storing computer instructions for causing a computer to perform the cruise control method of any one of claims 1 to 5.

14. A computer program product comprising computer program instructions, the computer program instructions, when executed by a computer, cause the computer to perform the method according to any one of claims 1 to 5.
